# EUROPÄISCHE PATENTANMELDUNG

(11) **EP 3 366 553 A1**
(43) Veröffentlichungstag der Anmeldung: **29.08.2018**
(21) Anmeldenummer: 18156246.3
(22) Anmeldetag: 12.02.2018
(51) Int. Cl.: B62D 21/11, B62D 29/00, B60L 11/18, H02J 7/02

(54) **ACHSTRÄGER ZUR ANORDNUNG AN EINEM ELEKTROKRAFTFAHRZEUG SOWIE VERFAHREN ZU DESSEN HERSTELLUNG**

(30) Priorität: 22.02.2017 DE 102017103663
(71) Anmelder: Benteler Automobiltechnik GmbH, 33102 Paderborn (DE)
(72) Erfinder: Grienitz, Volker, 59494 Soest (DE); Opdemom, Hermann, 59269 Beckum (DE); Körner, Matthias, 33758 Schloß Holte- Stukenbrock (DE); Rabe, Frank, 32120 Hiddenhausen (DE)
(74) Vertreter: Osterhoff, Utz

(57) **Zusammenfassung**

Die Erfindung betrifft einen Achsträger (1) zur Anordnung an einem Elektrokraftfahrzeug, wobei der Achsträger (1) als Schalenbauteil ausgebildet ist und eine Oberschale (2) sowie eine Unterschale (3) aus einem Faserverbundwerkstoff aufweist, dadurch gekennzeichnet, dass in der Unterschale (3) mindestens eine Induktionsleitung (20) integriert ist; sowie ein Verfahren zur Herstellung eines Achsträgers (1).

## Beschreibung

Die vorliegende Erfindung betrifft einen Achsträger zur Anordnung an einem Elektrokraftfahrzeug gemäß den Merkmalen im Oberbegriff von Anspruch 1.

Die vorliegende Erfindung betrifft weiterhin ein Verfahren zur Herstellung eines Achsträgers gemäß den Markmalen im Anspruch 15.

Aus dem Stand der Technik ist es bekannt, Kraftfahrzeuge mit kohlenstoffhaltigen Energieträgern anzutreiben. Hierzu werden Brennkraftmaschinen eingesetzt, welche die in dem Brennstoff vorhandene chemische Energie unter der Aufnahme von Sauerstoff und der Abgabe von Wärme und von Brenngasen in Bewegungsarbeit wandeln.

Der im Kraftfahrzeug mitgeführte und von der Brennkraftmaschine genutzte Brennstoff kann bei Bedarf an einer Tankstelle dem Kraftfahrzeug erneut zugeführt werden und dessen Betriebsbereitschaft für eine entsprechende Reichweite hergestellt werden.

Aufgrund der ökologischen und ökonomischen Notwendigkeit zur Minderung des Bedarfs an kohlenstoffhaltigen Energieträgern und zur Minderung der Abgabe von Brenngasen ersetzen elektrisch angetriebene Kraftfahrzeuge zunehmend die Fahrzeuge mit einer Brennkraftmaschine. Die zur Fortbewegung benötigte Energie wird hierbei in Batterien bzw. auch elektrischer Akkumulator bzw. Akkumulator-Batterie genannt, in dem Kraftfahrzeug selbst gespeichert. Zumeist sind hierzu Batterieträger bzw. Batteriewannen, [engl.: "battery tray"], insbesondere im Unterflurbereich des Kraftfahrzeuges angeordnet, um die zum Teil eine große Masse und einen großen Flächenbedarf aufweisenden Batterien aufzunehmen. Zum Zwecke des Ladens der-Batterien wird das Kraftfahrzeug über eine steckbare elektrische Leitung mit einem externen Elektrizitäts-Erzeuger verbunden, so dass eine elektrische Stromstärke den Wechsel der elektrischen Ladungen in jedem der angeschlossenen elektrischen Batterien bewirken kann.

Aus dem Stand der Technik ist es ferner bekannt, die Akkumulator-Batterie eines Elektrokraftfahrzeuges kontaktlos zu laden. Hierzu wird das Induzieren einer elektrischen Spannung mittels eines sich zeitlich ändernden magnetischen Feldes genutzt, um die elektrische Energie berührungslos an das Kraftfahrzeug zu übertragen.

An oder in dem Kraftfahrzeug ist hierzu ein entsprechender Induktionsleiter vorgesehen, dem von einer Ladestation mittels der Induktion elektrische Energie berührungslos zugeführt werden kann.

Aus der DE 10 2014 112 090 A1 ist ein Vorderachsträger bekannt, welcher in Schalenbauweise hergestellt ist.

Aus der WO 2016/096067 A1 ist ferner eine Umhüllung einer Sekundärspule bekannt, welche unterhalb eines Fahrzeugstrukturelementes angeordnet wird.

Die Aufgabe der vorliegenden Erfindung ist es, eine effektive Möglichkeit zur Integration eines Induktionsleiters, der wenigstens eine elektrische Induktionsschleife bildet, im Bereich einer Vorderachse aufzuzeigen.

Die zuvor genannte Aufgabe wird erfindungsgemäß bei einem Achsträger mit den Merkmalen im Anspruch 1 gelöst.

Ein verfahrenstechnischer Teil der Aufgabe wird mit den Merkmalen im Anspruch 15 gelöst.

Vorteilhafte Ausgestaltungsvarianten der vorliegenden Erfindung sind Gegenstand der abhängigen Ansprüche.

Der Achsträger ist zur Anordnung an einem Elektrokraftfahrzeug, insbesondere als Vorderachsträger ausgebildet. Der Achsträger kann auch als Achshilfsrahmen benannt sein. Der Achsträger selbst ist als Schalenbauteil ausgebildet und weist eine Oberschale sowie eine Unterschale auf, wobei zumindest die Unterschale aus einem Faserverbundwerkstoff ausgebildet ist. Er zeichnet sich dadurch aus, dass in der Unterschale selbst mindestens eine Induktionsleitung integriert ist. Zusätzlich kann die Unterschale aus einem Faserverbundwerkstoff einen oder mehrere magnetisierbare Körper umfassen, die innerhalb der von der Induktionsleitung gebildeten Induktionsschleife angeordnet sind.

Die Herstellung der Unterschale aus Faserverbundwerkstoff ermöglicht es somit, zumindest teilweise, insbesondere vollständig eine Induktionsleitung und insbesondere eine Induktionsschleife einzuschließen. Es kann somit auf ein separates Bauteil verzichtet werden. Enge Platzverhältnisse im Bereich des Achsträgers, insbesondere Vorderachsträgers, können dadurch kompensiert werden, dass die Induktionsschleife bereits während des Herstellungsprozesses des Achsträgers in diesen integriert ist. Somit kann die Induktionsleitung in dem Achsträger über einen flächenmäßig großen Bereich bereitgestellt sein, um eine effiziente kontaktlose Energieübertragung von dem Erregergerät einer bodenseitigen induktiven Ladestation zu ermöglichen.

Weiterhin besonders bevorzugt ist an der Unterschale auf einer Seite ein Organoblech angeordnet, welches insbesondere stoffschlüssig mit der Unterschale gekoppelt ist. Die Seite, an welcher das Organoblech angeordnet wird, ist insbesondere die Unterseite der Unterschale. Das Organoblech selbst ist ein aus einem Faserverbundwerkstoff hergestelltes flaches Produkt. Dies schützt die Unterschale und die darin befindliche Induktionsleitung vor Steinschlägen, Witterungseinflüssen und dient weiterhin als Unterfahrschutz.

In weiterer vorteilhafter Ausgestaltungsvariante ist die Oberschale selbst aus einem metallischen Werkstoff ausgebildet, beispielsweise aus einer Stahllegierung oder Aluminiumlegierung, insbesondere als Schalenbauteil und bevorzugt als Umformbauteil. Die Oberschale und die Unterschale sind besonders bevorzugt durch Formschluss und/oder Stoffschluss miteinander gekoppelt. Besonders bevorzugt sind Oberschale und Unterschale aneinander geklebt sowie optional zusätzlich genietet und/oder geschraubt. Zwischen Oberschale und Unterschale kann eine die zwei Schalen aussteifende Rippenstruktur vorgesehen sein. Die Rippen können insbesondere einstückig werkstoffeinheitlich mit der Unterschale hergestellt sein und optional mit der Oberschale gefügt werden. Die Rippen können auch separat hergestellt werden und mit der Unterschale gekoppelt werden und im Anschluss mit der Oberschale ebenfalls gekoppelt werden.

Insbesondere kann die Induktionsleitung und hier ein Masseanschluss der Induktionsleitung mit der metallischen Oberschale verbunden sein. Die metallische Oberschale ist mit einer Karosserie des Elektrokraftfahrzeuges verbunden. Der Aufwand an elektrischen Leitungen oder Anschlüssen kann dadurch reduziert werden.

Der Faserverbundwerkstoff der Unterschale, und hier insbesondere ein Teil, insbesondere der vollständige Faserverbundwerkstoff, ist insbesondere aus einem elektrisch nicht leitenden Faserwerkstoff und/oder Matrixharz hergestellt.

Insbesondere kann die Unterschale in einem Spritzgussverfahren aus Faserverbundwerkstoff hergestellt sein. Hierbei kann die Induktionsleitung insbesondere im Falle einer Induktionsschleife in dem Faserwerkstoff sowie in dem Matrixharz des Faserverbundwerkstoffes eingebettet sein. Bei dem Herstellungsvorgang wird ein Abscheren von Fasern, insbesondere auch ein Abtrennen von dem Matrixharzausgeschlossen. Somit ist die Induktionsleitung insbesondere vollständig in der Unterschale eingebettet bzw. eingeschlossen.

Die Unterschale kann jedoch auch beispielsweise als Fliesspressbauteil hergestellt werden. Insbesondere bietet sich dieses Herstellungsverfahren an, wenn die Induktionsleitung als flacher oder flächiger Körper und insbesondere aus einer oder mehrerer Lagen von einem Blech hergestellt ist. In diesem Falle kann die Induktionsleitung aus einem Blech ausgestanzt und/oder ausgeschnitten sein.

Im Falle, dass die Induktionsleitung nicht als flacher oder flächiger Körper ausgebildet ist, kann ebenfalls die Unterschale im Fliesspressverfahren hergestellt sein. Besonders bevorzugt werden hierzu zwei Halbschalen hergestellt, wobei zwischen den Halbschalen dann die Induktionsleitung eingegliedert ist und die Halbschalen miteinander gekoppelt werden, insbesondere durch stoffschlüssiges Kleben. Hierzu weist zumindest eine Halbschale, besonders bevorzugt an einer Innenseite, mithin an der zur anderen Halbschale gerichteten Seite, eine Ausnehmung, beispielsweise eine Nut auf. Diese Ausnehmung kann dann zur Aufnahme der Induktionsleitung bereitgestellt sein.

Bei der Induktionsleitung handelt es sich insbesondere um einen draht- oder rohrförmigen Leiter aus einem Endlosmaterial, welcher insbesondere aus einem elektrisch leitenden Werkstoff, bevorzugt mit einer spezifischen elektrischen Leitfähigkeit æ von wenigstens 10 • 10⁶ 1/(Ωm) bei T=293 Kelvin ausgebildet ist, beispielsweise Aluminium, Kupfer, Nickel oder deren Legierungen. Die Induktionsleitung ist insbesondere als Induktionsschleife ausgebildet. Auch kann die Induktionsleitung aus einer oder mehreren Lagen von einem Blech hergestellt sein. In diesem Fall wird die Induktionsleitung aus dem Blech ausgestanzt bzw. ausgeschnitten.

Der durch die Induktionsleitung sich ergebende Strompfad ist insbesondere länger als der kürzeste Abstand zwischen den elektrischen Polen, an denen die elektrische Spannung von der Induktionsleitung abgenommen wird.

Weiterhin vorteilhaft ist es vorgesehen, dass die Induktionsschleife auf die Unterschale aufgebracht ist und insbesondere auf diese aufgewickelt ist. Im Anschluss ist dann die Induktionsleitung mit einer Isolationsschicht überzogen oder umhüllt. Die Isolationsschicht selbst ist insbesondere aus dem Matrixmaterial des Faserverbundwerkstoffes hergestellt.

In einer weiteren vorteilhaften Ausgestaltungsvariante ist die Unterschale selbst mehrlagig ausgebildet. Mindestens eine Lage ist aus dem Faserverbundwerkstoff hergestellt und eine zweite Lage aus einem metallischen Werkstoff, wobei die beiden Lagen insbesondere stoffschlüssig miteinander gekoppelt sind. Die Lage aus metallischem Werkstoff kann insbesondere die Induktionsleitung selbst sein. Die mehrlagige Unterschale wird dann mit der Oberschale gekoppelt.

Weiterhin vorteilhaft ist mindestens eine Lage aus Faserverbundwerkstoff elektrisch nicht leitend ausgebildet. Mit dieser gekoppelt ist eine Lage aus elektrisch leitendem Werkstoff für die Induktionsleitung oder aber eine Induktionsleitung aus Endlosmaterial. Auf der der elektrisch nicht leitenden Lage gegenüberliegenden Seite ist weiterhin eine Schirmlage aus Faserverbundwerkstoff angeordnet. Somit wäre die Induktionsleitung zwischen einer elektrisch nicht leitenden Lage und einer Schirmlage angeordnet. Die Schirmlage ist insbesondere zumindest teilweise aus elektrisch leitendem Faserwerkstoff ausgebildet. Diese wird insbesondere von der Induktionsleitung entkoppelt, so dass eine elektrische Isolation zwischen Induktionsleitung und Schirmlage ausgebildet ist, beispielsweise durch elektrisch nicht leitendes Matrixharz.

Ein vorteilhaftes Herstellungsverfahren für den Achsträger sieht weiterhin vor, dass ein Faserwerkstoffrohling hergestellt wird. Der Faserwerkstoffrohling wird durch einen Wickelvorgang, alternativ auch durch einen Webvorgang hergestellt. Die Induktionsleitung wird dabei in den Faserwerkstoffrohling eingewickelt bzw. eingewebt. Im Anschluss und/oder während des Wickelvorgangs wird der so hergestellte Faserwerkstoffrohling mit Matrixharz imprägniert und optional einem anschließenden Umformvorgang unterzogen.

Hierdurch ist es möglich, die Induktionsleitung insbesondere vollständig in den Faserverbundwerkstoff einzubetten. Besonders bevorzugt kann die Induktionsleitung effektiv über einen frei wählbaren Flächenbereich in den Faserwerkstoffrohling gelegt werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfachen Verständnis der Erfindung. Es zeigen:
- Figur 1: einen erfindungsgemäßen Achsträger im Zusammenbau,
- Figur 2: eine Längsschnittansicht gemäß B-B aus Figur 1,
- Figur 3: eine Längsschnittansicht gemäß B-B aus Figur 1 durch die Unterschale,
- Figur 4: eine Längsschnittansicht gemäß Figur 3, jedoch mit zwei parallel übereinander angeordneten Induktionsleitungen,
- Figur 5 bis 16: verschiedene Formen von Induktionsleitungen in Draufsicht.

In den Figuren sind gleiche oder ähnliche Bauteile durch dieselben Bezugszeichen gekennzeichnet, auch wenn eine wiederholte Beschreibung aus Vereinfachungsgründen entfällt.

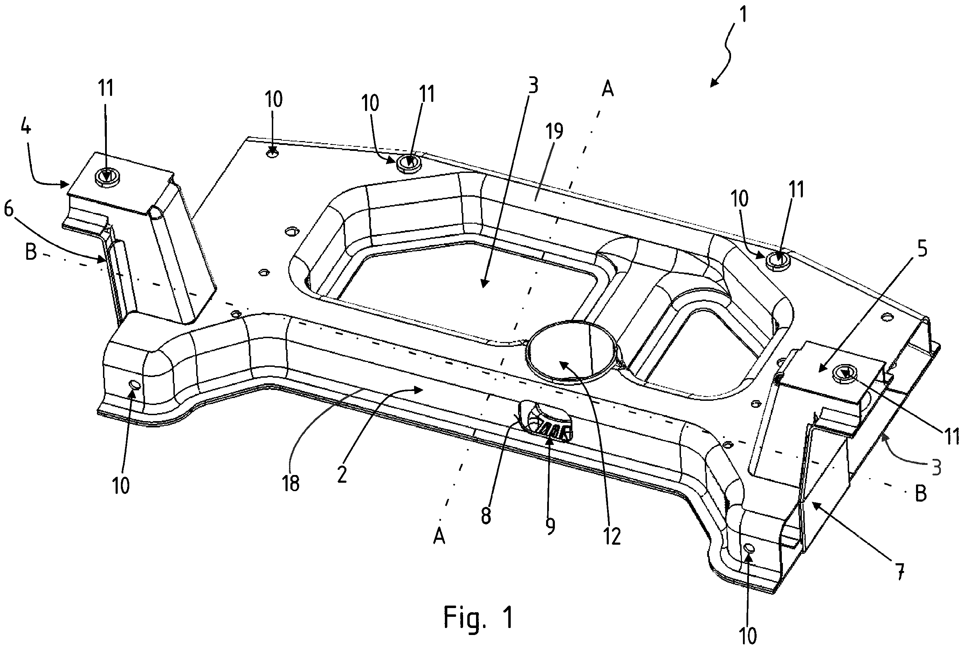

Eine Ausführung eines erfindungsgemäßen Achsträgers 1 im Zusammenbau zeigt die Figur 1. Der Achsträger 1 umfasst eine Oberschale 2, eine Unterschale 3 sowie eine Rippenstruktur mit Verstärkungsrippen 9 zur Aussteifung der Oberschale 2. Die Verstärkungsrippen 9 sind in der Figur 1 lediglich durch die Öffnung 8 hindurch zu erkennen, da sie sich ansonsten vollständig in dem Hohlraum 23 des Achsträgers 1 befinden. Die Oberschale 2 ist in diesem Ausführungsbeispiel aus einem Faserverbundwerkstoff hergestellt. Die Unterschale 3 besteht aus einem faserverstärkten Kunststoff, wobei die Faserverstärkung bevorzugt sowohl Langfasern als auch Kurzfasern beinhaltet. Die Verstärkungsrippen 9 sind einstückig aus der Unterschale 3 mit ausgebildet und bestehen aus einem kurzfaserverstärkten Kunststoff. Die Fasern haben hierbei eine Länge von bis zu zehn Zentimetern.

An der Oberschale 2 sind weiterhin zwei Anbindungstürme 4, 5 angebracht. Diese dienen der Anbindung des Achsträgers 1 an die Fahrzeugkarosserie. Aus der Unterschale 3 sind optional Versteifungsabschnitte 6, 7 ausgebildet, die in die Anbindungstürme 4, 5 hineinragen. Die Unterschale 3 selbst ist als ebene Fläche ohne Ausnehmungen ausgebildet und schließt die Oberschale 2 von unten vollflächig ab. Die Unterschale 3 kann auch analog der Oberschale 2 mit Längsträgern und Querträgern 18, 19 ausgebildet sein. Die Versteifungsabschnitte 6, 7 sind gegenüber der flächigen Ebene der Unterschale 3 nach oben, also zur Oberschale 2 hinweisend, abgewinkelt und schließen ihrerseits die Anbindungstürme 4, 5 ab. Andere Anbindungsstellen 10 für andere Fahrwerksteile, wie beispielsweise Stabilisator oder Lenker, sind zur Verstärkung teilweise ebenfalls mit Anbindungshülsen 11 versehen.

Eine weitere besonders ausgebildete Anbindungsstelle stellt das Lager 12 dar. Dieses dient der Anbindung einer Drehmomentstütze des Antriebs-Aggregats und damit der Abstützung der Drehmomente des Antriebs-Aggregats.

Dadurch, dass erfindungsgemäß die Oberschale 2 aus Faserverbundwerkstoff hergestellt ist, können die Anbindungstürme 4, 5 einstückig und werkstoffeinheitlich mit ausgebildet werden. Ebenfalls können die verschiedenen Anbindungsstellen 10 und/oder Anbindungshülsen 11 mit in den Faserverbundwerkstoff eingegossen werden. Die Oberschale 2 kann voneinander verschiedene Wandstärken aufweisen, welche insbesondere der jeweils bereichsweise vorgegebenen Festigkeit entsprechen.

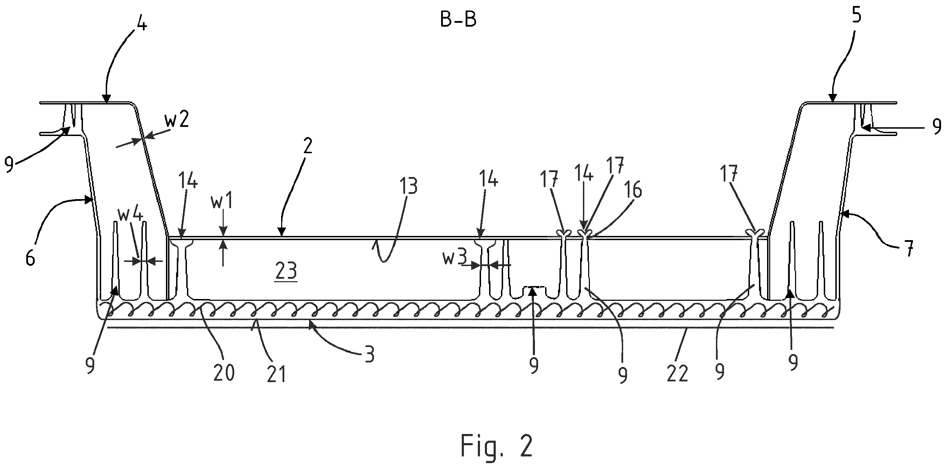

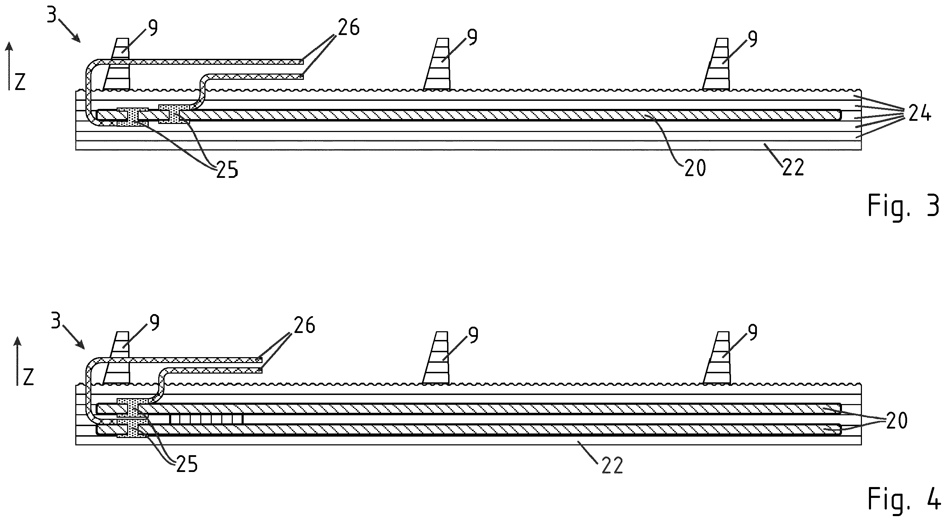

Figur 2 zeigt einen Längsschnitt gemäß der Schnittlinie B-B von Figur 1. Gut zu erkennen sind die Verstärkungsrippen 9, welche insbesondere zumindest teilweise an einer Innenseite 13 der Oberschale 2 anliegen. Ein oberes Ende 14 der Verstärkungsrippen ist dabei erfindungsgemäß verbreitert, insbesondere nach dem Prinzip eines Pilzkopfes. Dargestellt ist dies auf die Bildebene bezogen auf der linken Seite. In Detaildarstellung ist dies gezeigt in Figur 3 a) und b). Zunächst wird ein oberes Ende 14 der Verstärkungsrippe 9 erwärmt, dargestellt durch Wärmestrahlen 15. Die Wärme kann beispielsweise mittels Heißluft aufgebracht werden. Sodann wird die Verstärkungsrippe 9 an die Innenseite 13 der Oberschale 2 gedrückt. Das obere Ende 14 verbreitert sich nach dem Prinzip eines Pilzkopfes. Somit wird eine größere Anlagenfläche bereitgestellt, gleichzeitig jedoch auch eine stoffschlüssige Verbindung erzeugt.

Ferner sind voneinander verschiedene Wandstärken W1 und W2 hier exemplarisch an der Oberschale 2 dargestellt. Den jeweiligen Belastungen entsprechend können die Wandstärken W1 und W2 von Oberschale 2 und Unterschale 3 bereichsweise dimensioniert werden. Auch können die Wandstärken W3, W4 einzelner Verstärkungsrippen 9 verschieden sein.

Alternativ oder ergänzend ist es auch gemäß Figur 4 a) und b) möglich, das obere Ende 14 der Verstärkungsrippe 9 mit einem V-förmigen Spalt 17 bzw. Keil zu versehen und hier ebenfalls mit beispielsweise Wärmestrahlen 15 durch Heißluft aufzuschmelzen. Hierdurch wird bei Andrücken ein V-förmiges Aufspalten des oberen Endes 14 der Verstärkungsrippe 9, dargestellt in Figur 4 b), unterstützt.

In Figur 2, auf die Bildebene bezogen auf der rechten Seite, ist ferner dargestellt, dass das obere Ende 14 der jeweiligen Verstärkungsrippe 9 eine Ausnehmung 16 der Oberschale 2 durchgreift und insbesondere einen pilzkopfartigen Hinterschnitt ausbildet. Hierdurch wird eine zusätzliche formschlüssige Koppelung bereitgestellt. Dies kann auch mit der Verbreiterung des oberen Endes 14 auf der Innenseite 13 kombiniert werden.

Erfindungsgemäß ist nunmehr vorgesehen, dass eine Induktionsleitung 20 in der Unterschale 3 integriert ist. Die Induktionsleitung 20 ist insbesondere im Bereich einer Unterseite 21 angeordnet. Bevorzugt kann weiterhin ein Organoblech 22 unterhalb der Unterschale 3 angeordnet und optional mit dieser gekoppelt sein. Die Koppelung von Organoblech 22 und Unterschale 3 erfolgt dabei insbesondere auch stoffschlüssig.

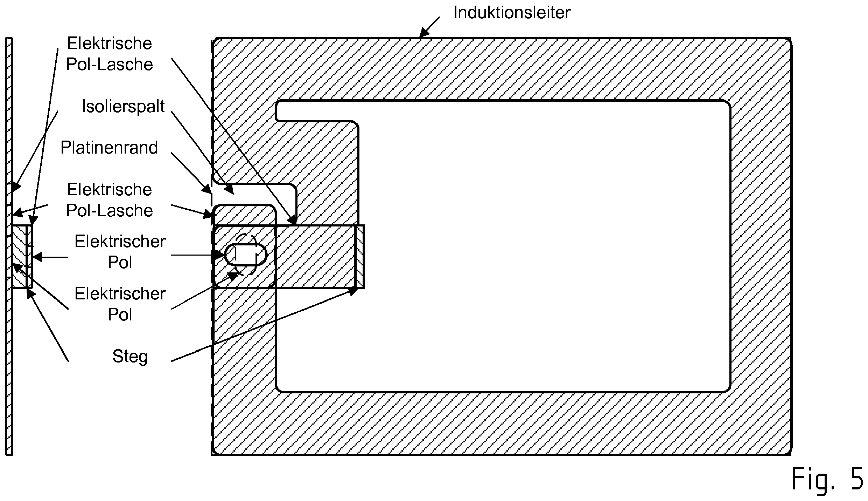

Figur 3 zeigt eine Längsschnittansicht gemäß der Schnittlinie B-B aus Figur 1 durch die erfindungsgemäß hergestellte Unterschale 3. Hierbei sind verschiedene Lagen Faserwerkstoff 24 übereinander angeordnet, wobei eine unterste Lage beispielsweise als Organoblech 22 ausgebildet ist. Die anderen Faserwerkstofflagen 24 können aus laminiertem Faserverbundwerkstoff hergestellt sein oder auch aus Organoblechen 22 die untereinander verklebt sind. Darin eingebettet bzw. eingeschlossen ist die Induktionsleitung 20. Die Induktionsleitung 20 hat an einer Seite elektrische Pole 25, welche nochmals in den Figuren 5 ff. dargestellt sind, die über elektrische Anschlussleitungen 26, beispielsweise mit einem nicht näher dargestellten Lademanagement verbunden sind.

Figur 4 zeigt eine Längsschnittansicht analog zu Figur 3, mit dem Unterschied, dass zwei Induktionsleitungen 20 parallel in Kraftfahrzeugvertikalrichtung übereinander angeordnet sind. Die zwei Induktionsleitungen 20 ergeben bevorzugt insgesamt eine Induktionsleitung, die entsprechend ein kontaktloses Laden ermöglicht.

Figur 5 bis 16 zeigen verschiedene Ansichten von möglichen Induktionsleitungen 20, dort Induktionsleiter genannt, jeweils in Draufsicht.

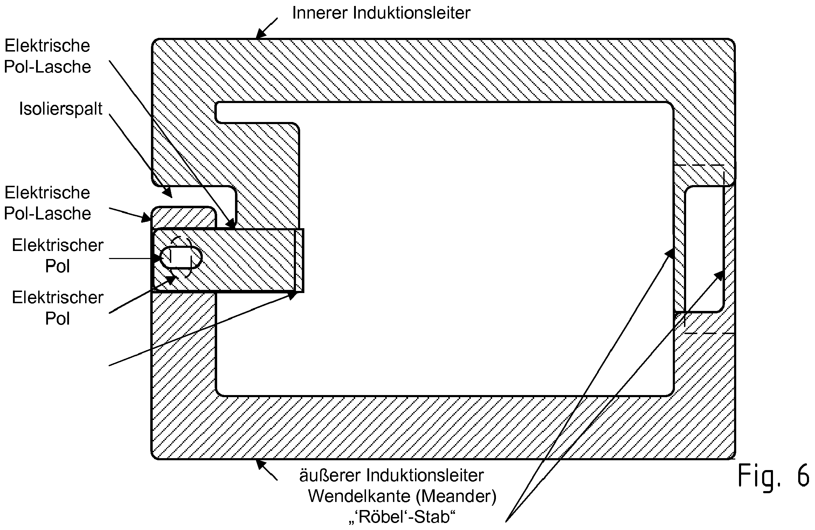

Figur 5 zeigt dabei eine Draufsicht sowie Seitenansicht eines Induktionsleiters, der als Stanzfaltstück aus einem Metallblech oder aus einer Metallfolie gefaltet ist. Gleiches gilt für Figur 6.

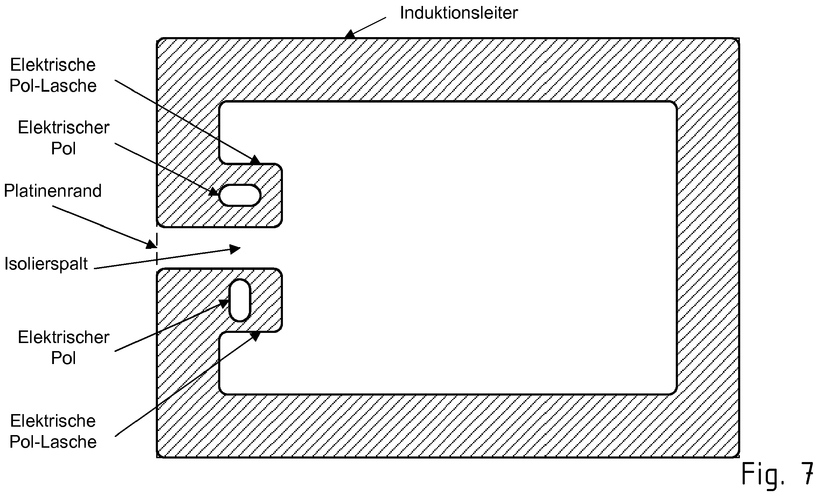

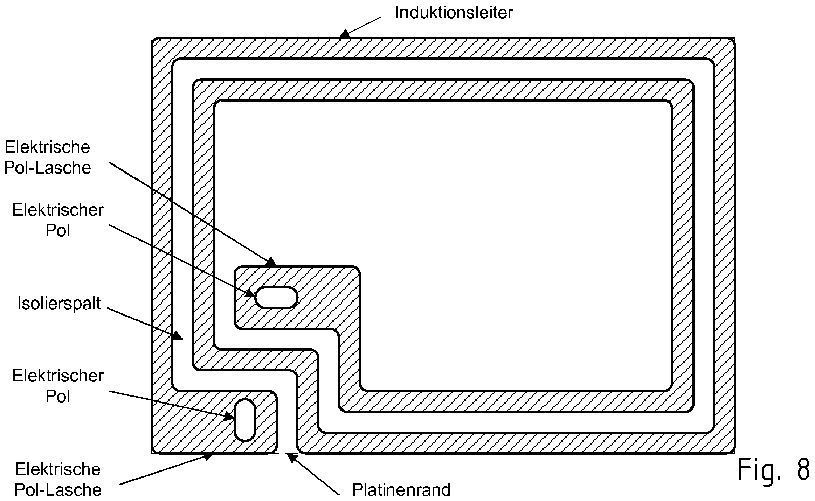

Figur 7 und Figur 8 zeigen jeweils Induktionsleiter, die als Stanzstück aus einem Blech geschnitten sind. Insbesondere der Induktionsleiter gemäß Figur 8 ist mehrfach gewunden.

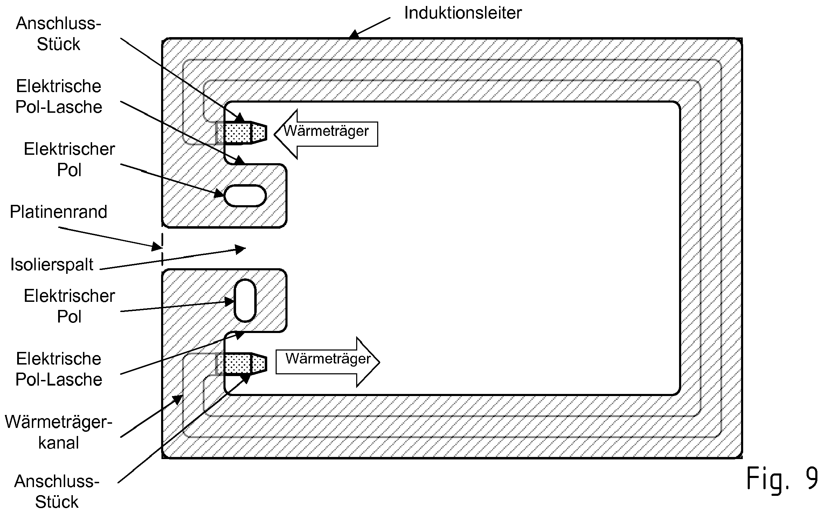

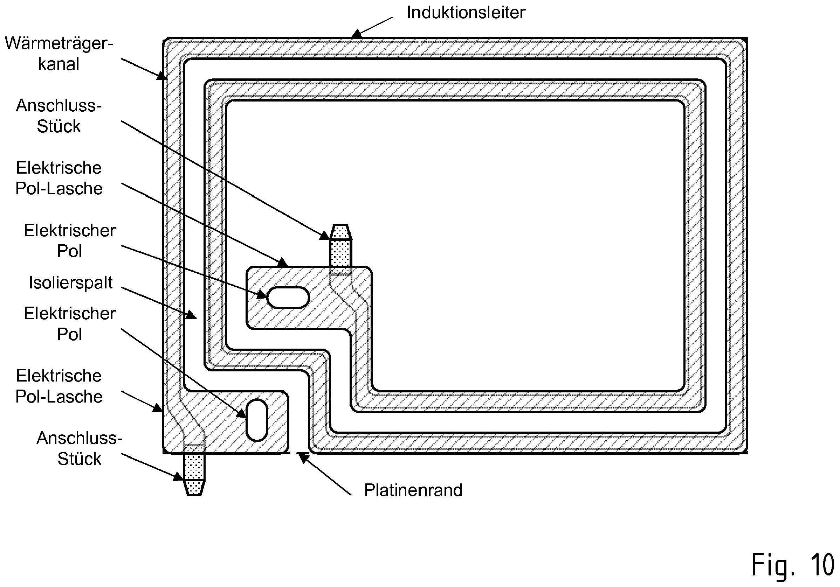

Figur 9 und 10 zeigen einen als Stanzfügestück aus einem Doppelblech hergestellten Induktionsleiter. Hier ist in den Induktionsleiter noch ein Wärmeträgerkanal integriert, so dass über Anschlussstücke ein Wärmeträgermedium zum insbesondere Kühlen durchgeleitet werden kann. Diese Wärmeträgerkanäle sind dann ebenfalls mit dem Induktionsleiter in dem Faserverbundwerkstoff eingelassen.

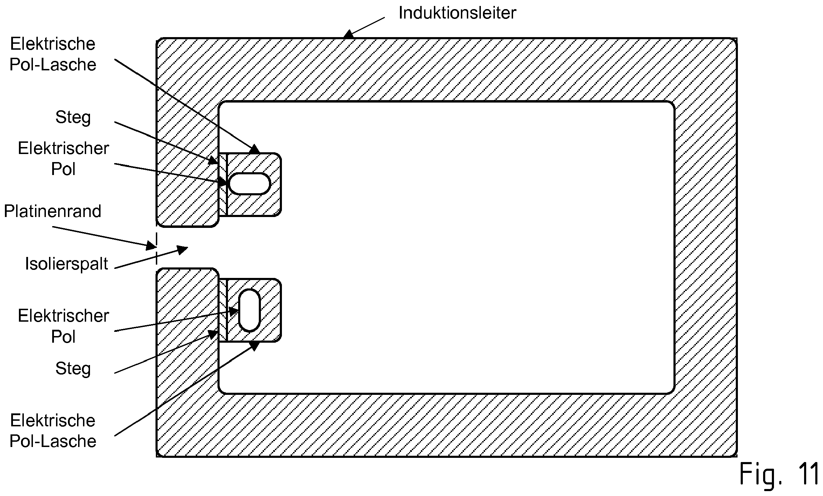

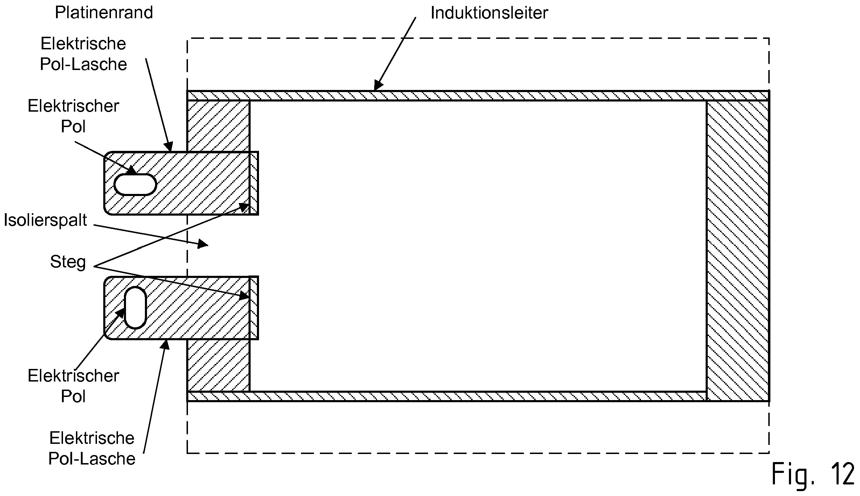

Figur 11 und 12 zeigen jeweils einen Induktionsleiter als Stanzkantstück, welche aus einem Blech ausgestanzt und im Anschluss gekantet sind.

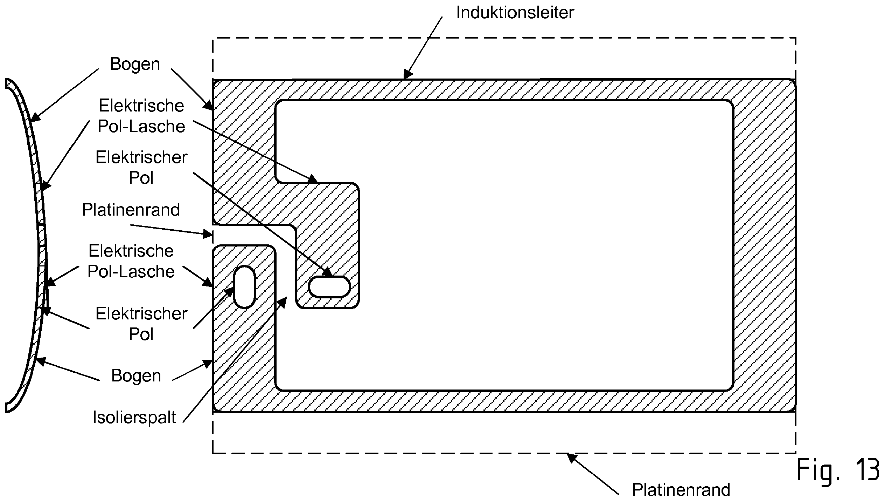

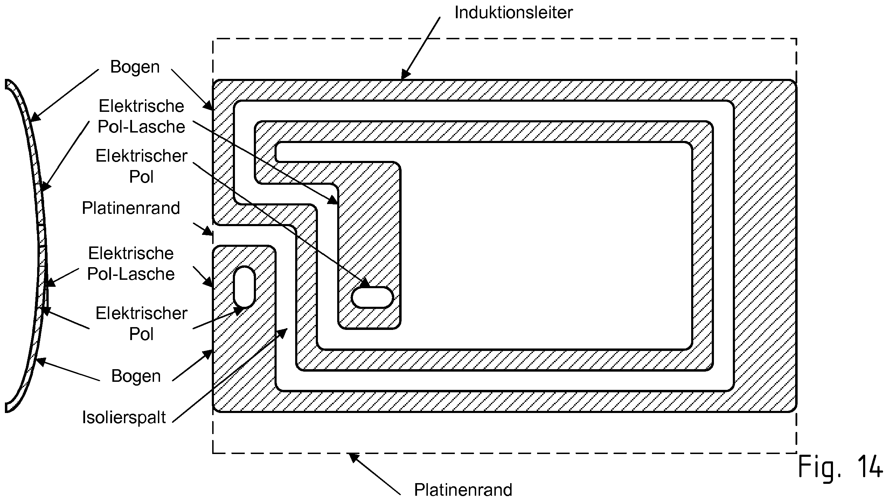

Figur 13 und 14 zeigen jeweils einen aus einem Stanzbiegestück aus einem Blech gebogenen Induktionsleiter in Draufsicht sowie Seitenansicht. Zu erkennen ist, dass der Induktionsleiter einen gekrümmten bzw. bogenförmigen Querschnittsverlauf aufweist.

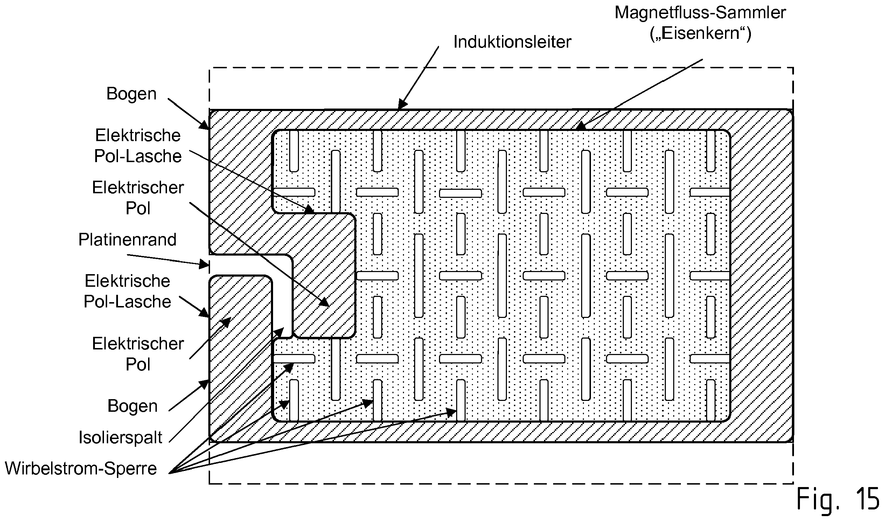

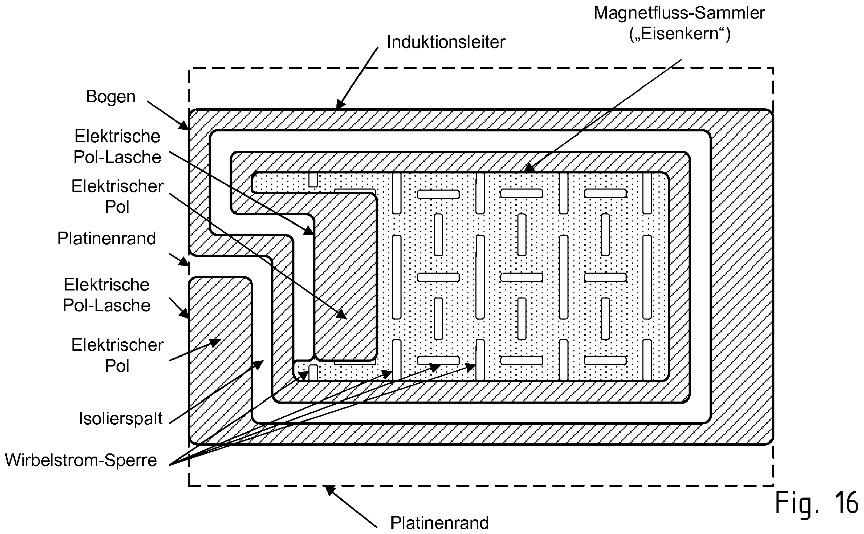

Figur 15 und 16 zeigen jeweils einen Induktionsleiter, der als Stanzstück aus einem Blech geschnitten ist. Im Innenbereich ist ein Magnetflusssammler, insbesondere

Eisenkern angeordnet. Der gesamte Induktionsleiter mit Eisenkern ist wiederum in den Faserverbundwerkstofif eingelassen.

### Bezugszeichen:

- 1 -: Achsträger
- 2 -: Oberschale
- 3 -: Unterschale
- 4 -: Anbindungsturm
- 5 -: Anbindungsturm
- 6 -: Versteifungsabschnitt
- 7 -: Versteifungsabschnitt
- 8 -: Öffnung
- 9 -: Verstärkungsrippen
- 10 -: Anbindungsstelle
- 11 -: Anbindungshülse
- 12 -: Lager
- 13 -: Innenseite zu 2
- 14 -: Oberes Ende zu 9
- 15 -: Wärmestrahlen
- 16 -: Ausnehmung
- 17 -: Spalt
- 18 -: Querträger zu 1
- 19 -: Querträger zu 1
- 20 -: Induktionsleitung
- 21 -: Unterseite
- 22 -: Organoblech
- 23 -: Hohlraum
- 24 -: Faserwerkstofflagen
- 25 -: elektrischer Pol
- 26 -: Anschlussleitung

- W1 -: Wandstärke
- W2 -: Wandstärke
- W3 -: Wandstärke
- W4 -: Wandstärke
- Z -: Kraftfahrzeugvertikalrichtung

## Patentansprüche

1. Achsträger (1) zur Anordnung an einem Elektrokraftfahrzeug, wobei der Achsträger (1) als Schalenbauteil ausgebildet ist und eine Oberschale (2) sowie eine Unterschale (3) aus einem Faserverbundwerkstoff aufweist, **dadurch gekennzeichnet, dass** in der Unterschale (3) mindestens eine Induktionsleitung (20) integriert ist.

2. Achsträger (1) nach Anspruch 1, **dadurch gekennzeichnet, dass** an der Unterschale (3) auf einer Seite ein Organoblech (22) angeordnet ist, welches insbesondere stoffschlüssig mit der Unterschale (3) gekoppelt ist, wobei die Seite insbesondere eine Unterseite (21) ist und/oder dass die Oberschale (2) aus einem metallischen Werkstoff ausgebildet ist.

3. Achsträger (1) nach Anspruch 1 oder 2, **dadurch gekennzeichnet, dass** die Induktionsleitung (20) in dem Faserverbundwerkstoff eingebettet ist, insbesondere in diesem eingeschlossen ist und/oder dass eine Masseleitung der Induktionsleitung (20) mit der metallischen Oberschale (2) gekoppelt ist.

4. Achsträger (1) nach einem der vorhergehenden Ansprüche, **dadurch gekennzeichnet, dass** die Unterschale (3) in einem Spritzgussverfahren aus Faserverbundwerkstoff hergestellt ist, insbesondere aus elektrisch nicht leitendem Faserverbundwerkstoff oder aus einem Faserverbundwerkstoff von elektrisch isolierten Fasern hergestellt ist.

5. Achsträger (1) nach einem der vorhergehenden Ansprüche, **dadurch gekennzeichnet, dass** zwischen Unterschale (3) und Oberschale (2) eine Rippenstruktur eingegliedert ist, wobei die Rippen der Rippenstruktur insbesondere mit der Unterschale (3) hergestellt sind und mit der Oberschale (2) gefügt sind.

6. Achsträger (1) nach einem der vorhergehenden Ansprüche, **dadurch gekennzeichnet, dass** die Unterschale (3) als Fließpressbauteil hergestellt ist wobei die Induktionsleitung (20) insbesondere als flacher oder flächiger Körper oder aus einem Blech hergestellt ist.

7. Achsträger (1) nach einem der vorhergehenden Ansprüche, **dadurch gekennzeichnet, dass** die Unterschale (3) aus zwei im Fließpressverfahren hergestellten Halbschalen ausgebildet ist, wobei zwischen den Halbschalen die Induktionsleitung (20) eingegliedert ist, insbesondere weist zumindest eine Halbschale an Ihrer Innenseite eine Ausnehmung (16) zur Aufnahme der Induktionsleitung (20) auf.

8. Achsträger (1) nach einem der vorhergehenden Ansprüche, **dadurch gekennzeichnet, dass** die Induktionsleitung (20) aus einem draht- oder rohrförmigen Leiter von einem Endlosmaterial gefertigt ist, insbesondere als Induktionsschleife oder dass die Induktionsleitung (20) aus einer oder aus mehreren Lagen von einem Blech hergestellt ist.

9. Achsträger (1) nach einem der Ansprüche 1 bis 8, **dadurch gekennzeichnet, dass** die Induktionsleitung (20) wenigstens einen Körper aus einem ferro-magnetischen oder ferritschen Werkstoff zumindest teilweise umgibt bzw. umwindet.

10. Achsträger (1) nach Anspruch 8 und 9, **dadurch gekennzeichnet, dass** der sich durch das Blech ergebende Strompfad länger ist, als der kürzeste Abstand zwischen den elektrischen Polen, an denen die in der Induktionsleitung (20) induzierte Elektrizität von der Induktionsleitung (20) abgenommen wird.

11. Achsträger (1) nach einem der vorhergehenden Ansprüche, **dadurch gekennzeichnet, dass** die Induktionsleitung (20) auf die Unterschale (3) aufgebracht und insbesondere aufgewickelt ist, und im Anschluss mit einer Isolationsschicht überzogen oder umhüllt wird, wobei die Isolationsschicht insbesondere aus dem Matrixmaterial ausgebildet ist.

12. Achsträger (1) nach einem der Ansprüche 1 bis 12, **dadurch gekennzeichnet, dass** die Induktionsleitung (20) zumindest teilweise von einem fluiden Wärmeträger um-, durch-, oder angeströmt wird zum Zwecke der Kühlung.

13. Achsträger (1) nach einem der vorhergehenden Ansprüche, **dadurch gekennzeichnet, dass** die Unterschale (3) mehrlagig ausgebildet ist, wobei mindestens eine Lage aus einem Faserverbundwerkstoff hergestellt ist und eine zweite Lage aus einem metallischen Werkstoff hergestellt ist, wobei die beiden Lagen insbesondere stoffschlüssig miteinander gekoppelt sind.

14. Achsträger (1) nach Anspruch 13, **dadurch gekennzeichnet, dass** die mindestens eine Lage aus einem Faserverbundwerkstoff elektrisch nicht leitend ausgebildet ist und auf der der elektrisch nicht leitenden Lage gegenüberliegenden Seite eine Schirmlage aus einem Faserverbundwerkstoff angeordnet ist, welche einen elektrisch leitendenden Faserwerkstoff aufweist.

15. Verfahren zur Herstellung eines Achsträgers (1) mit den Merkmalen von Anspruch 1, **dadurch gekennzeichnet, dass** ein Faserwerkstoffrohling durch ein Wickelverfahren hergestellt wird und die Induktionsleitung (20) in den Faserwerkstoffrohling eingewickelt wird, wobei nach und/oder während des Wickelverfahrens der so hergestellte Faserwerkstoffrohling mit Matrixharz imprägniert wird.
